# EUROPÄISCHE PATENTANMELDUNG

(11) **EP 1 918 123 A1**
(43) Veröffentlichungstag der Anmeldung: **07.05.2008**
(21) Anmeldenummer: 06022746.9
(22) Anmeldetag: 31.10.2006
(51) Int. Cl.: B42D 15/10

(54) **Kartenförmiger Datenträger und Verfahren zu seiner Herstellung**

(71) Anmelder: MAURER ELECTRONICS GMBH, 80992 München (DE)
(72) Erfinder: Fast, Peter, 86923 Finning/Entraching (DE)
(74) Vertreter: TER MEER - STEINMEISTER & PARTNER GbR

(57) **Zusammenfassung**

Die vorliegende Erfindung betrifft einen kartenförmigen Datenträger (10) mit einem Substrat (11) mit einem Aufzeichnungsbereich (3) für Information sowie ein Verfahren zu seiner Herstellung. Um in dem Aufzeichnungsbereich (3) bunte Farbinformation in hoher Qualität mittels Laserstrahl aufbringen zu können, ist in dem Aufzeichnungsbereich (3) eine Farbstoffschicht (12) aufgebracht, auf der eine Abdeckschicht (14) vorgesehen ist. Zum Aufzeichnen von Information ist es somit nur erforderlich, die Abdeckschicht (14) entsprechend der darzustellenden Information mit einem die Farbstoffschicht (12) freigebenden Muster zu versehen, also teilweise zu entfernen.

## Beschreibung

Die vorliegende Erfindung betrifft einen kartenförmigen Datenträger sowie ein Verfahren zu seiner Herstellung.

Kartenförmige Datenträger, wie beispielsweise Kreditkarten, Ausweiskarten, Führerscheinkarten, Firmenausweise und andere Wert- oder Ausweiskarten, sind heutzutage weit verbreitet im Gebrauch. Derartige Datenträger sind üblicherweise mit Informationen über die ausgebende Stelle und den berechtigten Inhaber des Datenträgers sowie mit Sicherheitsmerkmalen versehen. Häufig ist auch ein Portraitfoto des berechtigten Inhabers aufgebracht.

Während früher die einen kartenförmigen Datenträger oder eine Ausweiskarte individualisierende Information häufig in Schwarz-Weiß mittels Laserstrahlung in das Substrat des Datenträgers, beispielsweise durch Carbonisierung des Substratmaterials, eingeschrieben wurde, bestehen heutzutage Tendenzen, mehr und mehr die den Datenträger individualisierende Information, insbesondere sein Portraitfoto, in Farbe auf dem Datenträger wiederzugeben.

Beispielsweise ist aus der EP 0 537 484 A1 ein Aufzeichnungsträger, insbesondere eine Wert- oder Ausweiskarte mit farbiger Bildinformation bekannt. Die Bildinformation wird dabei wie beim Farbdruck üblich in ihre Farbanteile sowie in ein Schwarz-Weiß- oder Grauton-Anteil zerlegt. Der Grauton-Anteil wird mittels Laserstrahlung in eine transparente Folie eingeschrieben, die ein Hintergrundmuster auf einem Substrat der Karte überdeckt. Die Farbanteile der Bildinformation werden dann auf eine farbaufnehmende Schicht aufgedruckt, die auf der die Schwärzungen enthaltenden transparenten Schicht aufgebracht ist.

Aus der EP 1 044 826 A1 ist ein weiterer kartenförmiger Datenträger bekannt, der eine weißes mit einem Hintergrundbild bedruckbares Substrat, eine daraufliegende transparente schwärzbare Schicht sowie eine auf dieser vorgesehene farbaufnehmende Deckschicht aufweist. Die Farbanteile der auf den Datenträger aufzubringenden Bildinformation werden in herkömmlicher Weise aufgedruckt, während aus dem Originalbild gewonnene, erkennungsrelevante Merkmale zusätzlich zu dem Originalbild, deckungsgleich mit diesem, mittels Laserstrahlung in die transparente Schicht, und vorzugsweise gleichzeitig in das weiße Substrat eingeschrieben werden, wodurch die Fälschungssicherheit erhöht wird.

Problematisch bei derartigen Datenträgern ist es, dass die üblicherweise verwendeten Farbdrucker, also Tintenstrahldrucker oder Thermotransferdrucker zu Farbbildern führen, die nur schlecht auf Polycarbonatmaterial haften. Daher werden zusätzliche farbaufnehmende Schichten mit PVC-Materialien eingesetzt. Nichts desto trotz lassen sich die aufgedruckten Farbbilder relativ leicht entfernen und somit manipulieren, also fälschen oder zumindest verfälschen. Als Abhilfe wurden hier zusätzliche Deckfolien eingesetzt, die nach dem Druckvorgang auflaminiert werden müssen.

Ein weiteres Problem bei derartigen Datenträgern besteht darin, dass für Identitätsdokumente, also Ausweise, Pässe und dergleichen, eine Lebensdauer von mindestens 10 Jahren gefordert ist. Daher werden heute üblicherweise Polycarbonat oder Mischungen mit Polycarbonat für derartige Datenträger oder Ausweiskarten verwendet. Auch für die Farbechtheit wird eine Lebensdauer von mindestens 10 Jahren gefordert. Belichtungsverfahren mit Laserstrahlung ohne chemische Entwicklung sind aber über die genannten Zeiträume nicht stabil.

Der Erfindung liegt daher die Aufgabe zugrunde, einen weiteren Datenträger der eingangs genannten Art zu schaffen, auf dem bunte Farbinformation in hoher Qualität mittels Laserstrahl aufgebracht werden kann. Ferner soll ein einfaches Verfahren zur Herstellung eines derartigen Datenträgers angegeben werden.

Diese Aufgabe wird durch den Datenträger nach Anspruch 1 sowie das Verfahren nach Anspruch 19 gelöst. Vorteilhafte Weiterbildungen und Ausgestaltungen der Erfindung sind in den jeweiligen Unteransprüchen beschrieben.

Erfindungsgemäß ist also bei einem kartenförmigen Datenträger mit einem Substrat in einem Aufzeichnungsbereich eine Farbstoffschicht aufgebracht, auf der eine Abdeckschicht vorgesehen ist. Hierdurch wird ein Aufzeichnungsbereich für bunt darzustellende Information, insbesondere Bildinformation, wie beispielsweise ein Portraitfoto, geschaffen, der eine auch über lange Zeit lichtstabile, brillante Farbdarstellung ermöglicht, da für die Farbstoffschicht Farbstoffe eingesetzt werden können, die ausschließlich im Hinblick auf die Langzeitstabilität ausgewählt werden können, und da es beim Aufzeichnen von Information nur erforderlich ist, die Abdeckschicht entsprechend der darzustellenden Information mit einem die Farbstoffschicht freigebenden Muster zu versehen.

Obwohl es grundsätzlich möglich und denkbar ist, eine Farbstoffschicht aus einem einzigen Farbstoff für einen einzigen Buntton herzustellen, wenn eine Schwarz-Weiß-Darstellung mit nur einem Buntton kombiniert werden soll, ist es erfindungsgemäß bevorzugt, dass die Farbstoffschicht aus wenigstens zwei Farbstoffen mit unterschiedlichen Bunttönen hergestellt ist.

Dabei ist es möglich, dass die Farbstoffschicht aus wenigstens zwei Farbstofffilmen mit unterschiedlichen Bunttönen hergestellt ist, die zumindest teilweise überlappend, vorzugsweise jedoch deckungsgleich übereinander liegend ausgebildet sind. Durch Freilegen der jeweiligen Farbstoffschicht in den einzelnen Bildpunkten, also durch Entfernen der Abdeckschicht und gegebenenfalls der die gewünschte Farbstoffschicht überlagernden Farbstoffschichten, lässt sich bunte Bildinformation mit unterschiedlich großen, jeweils einfarbigen Bildpunkten darstellen.

Bei einer anderen vorteilhaften Weiterbildung der Erfindung ist vorgesehen, dass die verschiedenen Farbstoffe in einer Lage abwechselnd linienrasterförmig angeordnet sind.

Besonders vorteilhaft ist es, wenn die verschiedenen Farbstoffe in einer Lage als Farbstoffpunkte abwechselnd rasterförmig angeordnet sind, so dass in jedem Bildpunkt alle verwendeten Bunttöne vorhanden sind, wobei die jeweiligen Farbstoffpunkte in den verschiedenen Bildpunkten zufällig oder pseudozufällig abwechselnde Positionen einnehmen. Insbesondere wenn die einzelnen Farbstoffpunkte innerhalb der Bildpunkte zufällig oder pseudozufällig angeordnet sind, lassen sich auch regelmäßige bunte Bildinformationen störungsfrei, also insbesondere ohne Moiremuster darstellen.

Zweckmäßiger Weise ist vorgesehen, dass die Rasterweite entsprechend einer Bildpunktgröße einer aufzuzeichnenden Information gewählt ist.

Um für das Aufzeichnen von bunt darzustellender Information Bildverarbeitungssysteme einsetzen zu können, wie sie auch für den Vierfarbdruck verwendet werden, ist vorgesehen, dass die Farbstoffschicht aus drei Farbstoffen hergestellt ist, deren jeweiligen Bunttöne den Komplementärfarben von rot, grün und blau entsprechen.

Obwohl es grundsätzlich denkbar ist, eine semitransparente Abdeckschicht einzusetzen, ist es bevorzugt, dass die Abdeckschicht undurchsichtig ist.

Für die Abdeckschicht, insbesondere die undurchsichtige Abdeckschicht kann jedes Material eingesetzt werden, das thermisch hoch leitfähig ist, also auch Kunststoffe mit hoher Wärmeleitfähigkeit. Derartige Kunststoffe bestehen üblicher Weise aus einer Kombination von Basispolymer und geeignetem Füllstoff. Vorteihafter Weise ist jedoch vogesehen, dass die Abdeckschicht eine Metallschicht umfasst.

Die Metallschicht kann dabei als Metallfolie vorgesehen sein, die über der Farbstoffschicht liegend auf das Substrat auflaminiert ist. Eine andere Möglichkeit besteht darin, einen Metallfilm vorzusehen, der die Farbstoffschicht abdeckend auf das Substrat aufgedampft ist.

Um die Brillanz und den Kontrast der bunt aufgezeichneten Information zu verbessern, ist es vorteilhafter Weise vorgesehen, dass die Abdeckschicht eine auf der Metallschicht liegende Farbstoffschicht umfasst, deren Farbton (Buntton, weiß, schwarz oder grau) die Oberflächenfarbe der Abdeckschicht, vorzugsweise weiß, festlegt.

Besonders vorteilhaft ist es dabei, wenn die auf der Metallschicht liegende Farbstoffschicht eine Metalloxidschicht ist, die insbesondere durch Oxidation der Metallschicht erzeugt ist.

Das Substrat besteht zweckmäßiger Weise auf Polycarbonat oder enthält zumindest Polycarbonat.

Zur Darstellung der Information ist vorgesehen, dass die Abdeckschicht derart gemustert ist, dass die Farbstoffschicht entsprechend einer im Aufzeichnungsbereich des Datenträgers darzustellenden Information, insbesondere Bildinformation freigelegt, also sichtbar ist, wobei Information, insbesondere Bildinformation, die einem Schwarz- und/oder Grauanteil der aufzuzeichnenden Information darstellt, mittels Strahlung, insbesondere Laserstrahlung in das Substrat eingeschrieben ist.

Zum Schutz der Aufzeichnungen auf dem Datenträger und zur Erhöhung der Fälschungssicherheit ist es vorteilhaft, wenn auf dem gesamten Substrat eine transparente Deckschicht aufgebracht ist, die vorzugsweise aus Polycarbonat besteht oder Polycarbonat enthält.

Um einen kartenförmigen Datenträger herzustellen, der in seinem Aufzeichnungsbereich diesen individualisierende Information trägt, ist es zweckmäßig, entsprechend der folgenden Schritte zu verfahren: Bereitstellen eines Substrats; Aufbringen einer Farbstoffschicht; Aufbringen einer die Farbstoffschicht abdeckenden Abdeckschicht; und teilweises Entfernen der Abdeckschicht entsprechend einer im Aufzeichnungsbereich des Datenträgers darzustellenden Information, insbesondere Bildinformation mittels Strahlung, insbesondere mittels Laserstrahlung.

Zur Erhöhung der Fälschungssicherheit des resultierenden Datenträgers ist es zweckmäßig, wenn während oder nach dem Entfernen der Abdeckschicht Information entsprechend einem Schwarz- und/oder Grauanteil der darzustellenden Information mittels Strahlung, insbesondere Laserstrahlung in das Substrat eingeschrieben wird. Hierdurch wird die Brillanz und der Kontrast der bunt darzustellenden Information, also eines Bildes, eines Portraitfotos oder einer sonstigen komplexen Farbinformation erhöht, wobei die zusätzliche Schwärzung die ohnehin hohe Fälschungssicherheit der erfindungsgemäßen Informationsaufzeichnung weiter verbessert.

Bei einer praktischen Ausgestaltung des erfindungsgemäßen Verfahrens zur Herstellung eines Datenträgers ist vorgesehen, dass nach dem Aufbringen der Abdeckschicht eine transparente Deckschicht auf dem gesamten Substrat aufgebracht wird und das teilweise Entfernen der Abdeckschicht und gegebenenfalls das Einschreiben von unbunter Information in das Substrat durch die Deckschicht hindurch erfolgt.

Die Erfindung wird im Folgenden beispielsweise anhand der Zeichnung näher erläutert. Es zeigen:
Figur 1 eine schematische Draufsicht auf einen vereinfacht dargestellten kartenförmigen Datenträger, insbesondere auf eine Ausweiskarte,
Figur 2 eine schematische perspektivische Teilansicht des Datenträgers mit einem Aufzeichnungsbereich,
Figur 3 einen schematischen Schnitt durch einen Datenträger im Wesentlichen nach Linie III-III in Figur 2,
Figur 4 eine schematische vergrößerte Draufsicht auf eine Farbstoffschicht eines Datenträgers zur Veranschaulichung der Anordnung der einzelnen Farbstoffe dieser Schicht,
Figur 5 eine vergrößerte schematische Draufsicht auf eine Farbstoffschicht des Datenträgers zur Veranschaulichung einer punktförmigen Anordnung der verschiedenen Farbstoffe der Farbstoffschicht,
Figur 6 eine Ansicht ähnlich Figur 5, bei der die Farbstoffe innerhalb von Bildpunkten unterschiedlich angeordnet sind,
Figur 7 einen schematischen Schnitt durch einen Datenträger entsprechend Figur 3 mit darauf aufgezeichneten Bildinformationen, und
Figur 8 einen Schnitt ähnlich Figur 3 durch einen Datenträger mit einer anderen Ausgestaltung einer Farbstoffschicht.

In den verschiedenen Figuren der Zeichnung sind einander entsprechende Teile mit gleichen Bezugszeichen versehen.

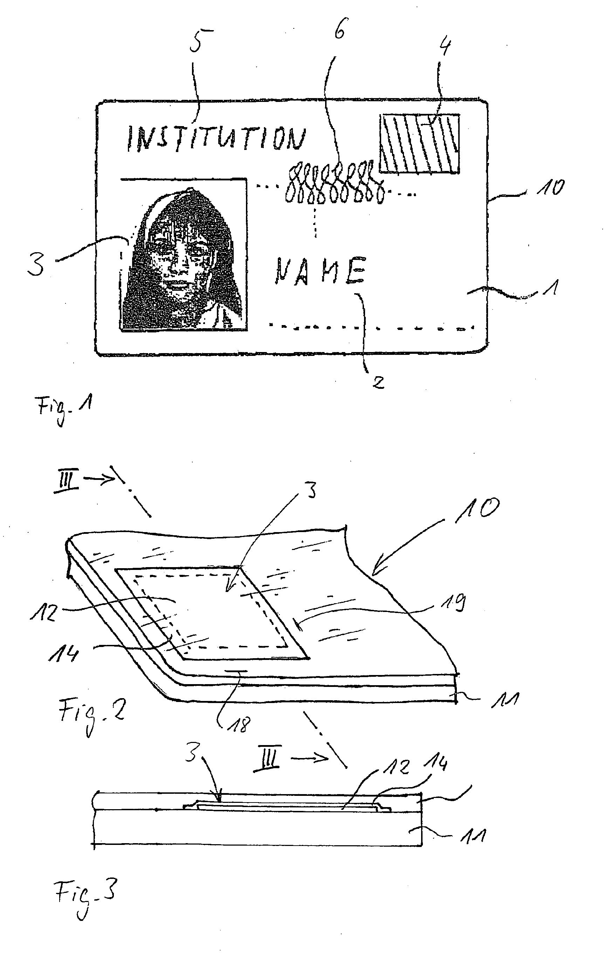

In Figur 1 ist beispielsweise eine Ausweiskarte als kartenförmiger Datenträger 10 dargestellt, der eine Aufzeichnungsfläche 1 mit einem Beschriftungsbereich 2, einen Aufzeichnungsbereich 3 für die bunte Darstellung von Information, insbesondere Bildinformation, einen Sondereffektbereich 4 und einen Bereich für allgemeine Information 5 aufweist. Ein Sicherheitshintergrund 6, der nur rein schematisch und stark vereinfacht angedeutet ist, kann in einzelnen oder allen Bereichen 2 bis 5 der Aufzeichnungsfläche 1 vorgesehen sein.

Wie in den Figuren 2 und 3 dargestellt ist, ist auf einem Substrat 11 des Datenträgers 10 im Aufzeichnungsbereich 3 für die bunte Darstellung von Information eine Farbstoffschicht 12 aufgebracht, auf der eine Abdeckschicht 14 aus einem thermisch hoch leitfähigen Material vorgesehen ist. Auf der gesamten Oberfläche des Substrats 11 ist eine transparente Deckschicht 15 vorgesehen, die die gesamte Aufzeichnungsfläche 1 so abdeckt, dass die in den verschiedenen Bereichen 2 bis 6 aufgebrachten Darstellungen und Informationen vom Betrachter des Datenträgers 10 deutlich erkannt werden können, aber zuverlässig gegen Umwelteinflüsse geschützt sind.

Die Farbstoffschicht 12, die grundsätzlich auch aus einem einzigen Farbstoff bestehen kann, wenn beispielsweise eine Schwarz-Weiß-Darstellung mit einem Buntton kombiniert werden soll, besteht jedoch insbesondere aus wenigstens zwei Farbstoffen mit unterschiedlichen Bunttönen, vorzugsweise jedoch aus drei Farbstoffen, deren Bunttöne den Komplementärfarben von rot, grün und blau entsprechen. Beispielsweise können wie beim Farbdruck als Bunttöne für die verschiedenen Farbstoffe Cyan c, Magenta m und Gelb g gewählt werden. Wie in Figur 4 dargestellt ist, können die drei verschiedenen Farbstoffe der Bunttöne Cyan c, Magenta m und Gelb g als Farbstoffstreifen 16 linienrasterförmig angeordnet sein, wobei sich die verschiedenen Farbstoffe periodisch wiederholen. Der Abstand der Streifen 16 eines Farbstoffs entspricht dabei der Größe oder dem Durchmesser d eines Bildpunkts oder Pixels p. Die Bildpunktgröße liegt dabei insbesondere im Bereich von 30 µm bis maximal 100 µm.

Die Bildpunkte p können dabei in Form einer rechtwinkligen Matrix angeordnet sein, wie links in Figur 4 angedeutet ist. Es ist aber auch möglich die Bildpunkte in einer schrägen Matrix auszurichten, so dass sich die Reihenfolge der Bunttöne in den Pixeln p von Spalte zu Spalte ändert, wie gestrichelt in der rechten Hälfte der Figur 4 dargestellt ist.

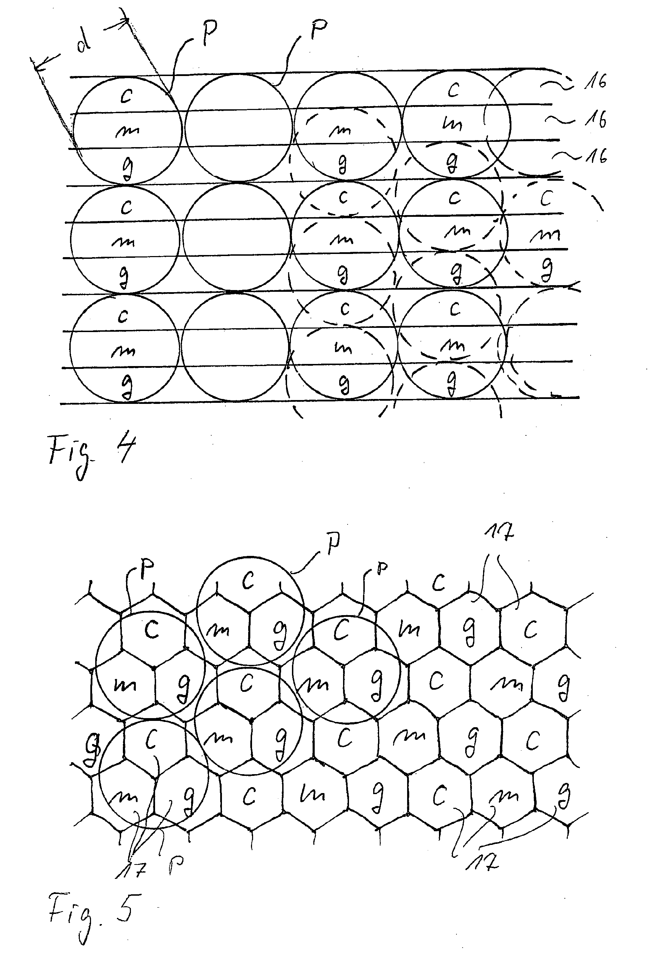

Anstelle einer linienrasterförmigen Anordnung der verschiedenen Farbstoffe können diese auch, wie in Figur 5 gezeigt, als Farbstoffpunkte abwechselnd rasterförmig angeordnet sein, so dass in jedem Bildpunkt p alle verwendeten Bunttöne, also im dargestellten Ausführungsbeispiel Cyan c, Magenta m und Gelb g vorhanden sind. Die Figur 5 zeigt eine bienenwabenförmige Anordnung der einzelnen Farbstoffpunkte 17. Es sind jedoch auch andere Kombinationen der einzelnen Farbstoffpunkte denkbar. Im Falle eines schwarzen Substrats könnten beispielsweise die einzelnen Bildpunkte als Quadrate matrixförmig angeordnet sein, wobei jeder Bildpunkt wiederum in vier Quadrate unterteilt werden könnte, von denen drei die verschiedenen Farbstoffe aufnehmen, während der vierte für die Darstellung von Schwarz nutzbar wäre.

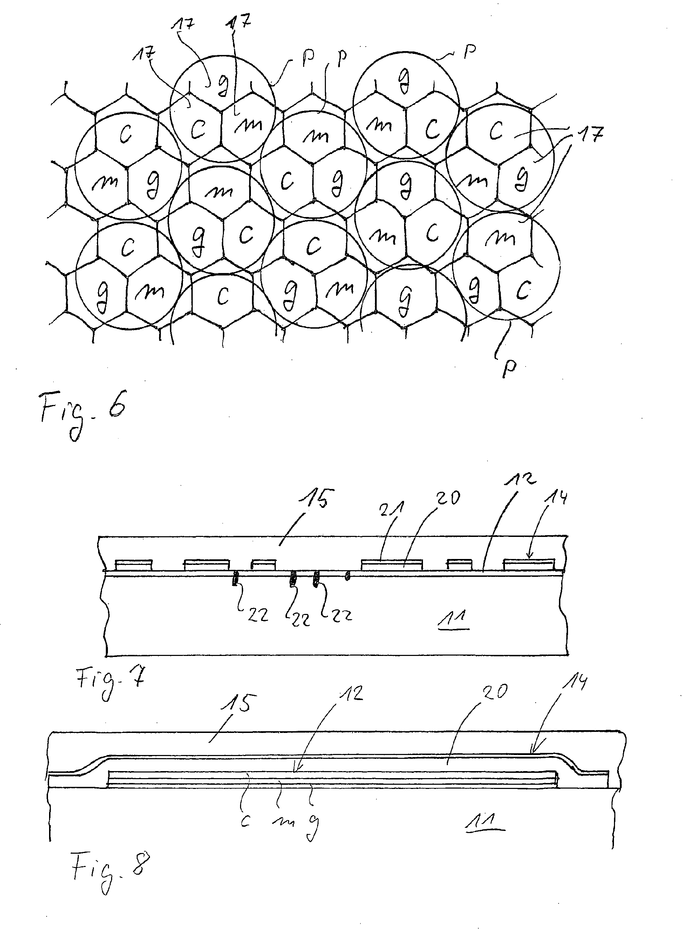

Um das Auftreten von Moiremustern möglichst auszuschließen, ist es besonders zweckmäßig, wenn die jeweiligen Farbstoffpunkte 17 in den verschiedenen Bildpunkten p zufällig oder pseudozufällig abwechselnde Positionen einnehmen. Wie in Figur 6 dargestellt, ändert sich die Reihenfolge der Bunttöne beginnend mit dem oberen Farbstoffpunkt 17 in einem Bildpunkt p in Uhrzeigerrichtung gesehen in zufälliger oder pseudozufälliger Weise von Bildpunkt p zu Bildpunkt p. Die bei drei Bunttönen möglichen sechs verschiedenen Reihenfolgen werden dabei zufällig oder pseudozufällig auf die Bildpunkte p verteilt.

Um in jedem Bildpunkt p den für die bunte Darstellung von Information erforderlichen Buntton darstellen zu können, ist es erforderlich, dass die Lage der einzelnen Farbstoffpunkte 17 oder Farbstoffstreifen 16 genau bekannt ist. Im Falle der in Figur 4 dargestellten Farbstoffstreifen 16, ist, wie in Figur 2 dargestellt ist, eine Referenzlinie 18 parallel zu diesen angeordnet, so dass ausgehend von der Referenzlinie 18, die mittels einer Kamera erfasst wird, die Lage der einzelnen Farbstoffstreifen 16 bekannt ist.

Bei der rasterförmigen Anordnung von Farbstoffpunkten 17, wie dies in den Figuren 5 und 6 dargestellt ist, ist eine weitere quer zur ersten verlaufende Referenzlinie 19 erforderlich, wobei die Lage der einzelnen Farbstoffpunkte 17 relativ zu den Referenzlinien bekannt sein muss. Sind die Farbstoffpunkte der einzelnen Bunttöne c, m, g in jedem der Bildpunkte p in gleicher Weise angeordnet, so lässt sich die Lage der Farbstoffpunkte aus dem Abstand des jeweiligen Bildpunkts p zu den Referenzlinien 18, 19 in Y- bzw. X-Richtung ermitteln. Ist, wie in Figur 6 dargestellt, jedoch die Verteilung der Farbstoffpunkte 17 innerhalb der Bildpunkte p zufällig oder pseudozufällig verteilt, so muss für jeden Farbstoffpunkt 17 neben seiner Position auch der jeweilige Buntton bekannt sein.

Vor dem Einschreiben von Information in den Aufzeichnungsbereich 3 ist die Farbstoffschicht 12 vollständig von der Abdeckschicht 14 überlagert. Obwohl es grundsätzlich denkbar ist, als Abdeckschicht 14 eine semitransparente Abdeckschicht 14 vorzusehen, um einen relativ dunklen Hintergrund für die bunt darzustellende Information bereitzustellen, ist es jedoch bevorzugt, dass die Abdeckschicht 14 undurchsichtig ist. Insbesondere kann als Abdeckschicht 14 eine Metallschicht, z.B. eine Schicht aus Aluminium, Silber, Kupfer, Chrom oder dergleichen vorgesehen sein. Wie in den Figuren 7 und 8 dargestellt ist, umfasst die Abdeckschicht 14 eine undurchsichtige Schicht 20, beispielsweise eine Metallschicht, die von einem aufgedampften Metallfilm oder einer auflaminierten Metallfolie gebildet sein kann, und eine daraufliegende Farbstoffschicht 21, die die Oberflächenfarbe der Abdeckschicht 20 festlegt. Die Farbstoffschicht 21 auf der undurchsichtigen Schicht 20 der Abdeckschicht 14 kann beispielsweise als Metalloxid ausgebildet sein. Insbesondere ist es denkbar, wenn als undurchsichtige Schicht 20 eine Aluminiumfolie oder ein Aluminiumfilm vorgesehen ist, dass dieser elektrisch oxidiert wird, um eine matte weiße Oberfläche zu erhalten.

Wie in Figur 7 dargestellt ist, ist die Abdeckschicht 14 entsprechend der im Aufzeichnungsbereich 3 des Datenträgers 10 bunt darzustellenden Information, insbesondere Bildinformation freigelegt, so dass diese Bereiche durch die transparente Deckschicht 15 hindurch sichtbar sind.

Wie in Figur 8 angedeutet, können anstelle der Farbstoffschicht aus rasterförmig nebeneinander angeordneten Farbstoffen auch eine Farbstoffschicht 12 vorgesehen sein, bei der die verschiedenen Farbstoffe mit unterschiedlichen Bunttönen z.B. Cyan c, Magenta m und Gelb g jeweils einander überlappend oder vorzugsweise vollständig überdeckend angeordnet sind.

Zur Herstellung eines erfindungsgemäßen Datenträgers 10 wird zunächst auf einem Substrat 11 aus Polycarbonat die Farbstoffschicht 12 aus hoch temperaturstabilen Farbstoffen, vorzugsweise rasterförmig, insbesondere punktrasterförmig aufgebracht, so dass in jedem Bildpunkt ein Farbstofftrippel c, m, g vorliegt. Auf die Farbstoffschicht 12 wird dann die Abdeckschicht 14 aufgetragen, die aus einem thermisch hoch leitfähigen Material, vorzugsweise aus Metall besteht. Die Abdeckschicht 14 kann dabei aufgedampft werden. Es ist aber auch möglich, eine Metallfolie, z.B., eine Aluminiumfolie aufzulaminieren, auf der bereits eine Farbstoffschicht 21, z.B. aus Aluminiumoxid aufgebracht ist.

Nach dem Abdecken der Farbstoffschicht 12 kann dann das Einschreiben der bunt darzustellenden Information in den Aufzeichnungsbereich 3 durch Entfernen der Farbstoffschicht 14 entsprechend der einzuschreibenden Bildinformation mittels Laserstrahlung erfolgen. Vorzugsweise ist jedoch vorgesehen, dass zunächst die transparente Deckschicht 15 auf das Substrat 11 aufgebracht wird, das in den übrigen Bereichen mit den allgemeinen Informationen beispielsweise über die Ausgabestelle des Datenträgers und gegebenenfalls mit Sicherheitshintergrund und Spezialeffekten versehen ist.

Der so vorbereitete Datenträger kann dann durch Einschreiben von bunt darzustellender Information in den Aufzeichnungsbereich 3 individualisiert werden. Hierzu wird die Abdeckschicht 14 in den zu entfernenden Bereichen mit Strahlung, insbesondere Laserstrahlung beaufschlagt, so dass sie aus diesen Bereichen entfernt wird. Anders gesagt, werden durch Strahlung unterschiedlich große Löcher in der Abdeckschicht 14 erzeugt, die die darunter liegenden Farbstoffstreifen 16 oder -punkte 17 freigeben. Wie in Figur 7 ferner angedeutet ist, ist es zusätzlich möglich, mit entsprechend hoher Strahlungsenergie die Farbstoffschicht 12 und das darunterliegende Substrat 11 beispielsweise durch Carbonisierung zu schwärzen, um unbunte Bildpunkte 22 zu erzeugen.

Der erfindungsgemäße kartenförmige Datenträger weist eine wesentlich erhöhte Fälschungssicherheit auf, da sich die im Aufzeichnungsbereich 3 bunt dargestellte Information, nicht zerstörungsfrei manipulieren, also fälschen oder verfälschen lässt. Durch das zusätzliche Einschreiben von unbunter Bildinformation in das Substrat 11 wird die Fälschungssicherheit weiter erhöht, da sich diese unbunte Information ohne Zerstörung des Substrats 11 nicht aus diesem entfernen lässt.

Eine weitere Erhöhung der Fälschungssicherheit ergibt sich durch die vollständige Einbettung von Farbstoffschicht 12 und Abdeckschicht 14 im Kartenkörper, der aus Substrat 11 und Deckschicht 15 gebildet wird.

Erfindungsgemäß lässt sich also mittels Laserstrahlung in den Aufzeichnungsbereich aus Farbstoffschicht und Abdeckschicht eine gewünschte bunt darzustellende Information aufzeichnen, wobei an den Stellen, an denen der Farbeindruck schwarz erwünscht ist, eine vorzugsweise Carbonisierung erfolgt, so dass ein Bild oder eine sonstige komplexe Farbinformation mit großer Brillanz und hohem Kontrast erhalten wird, die eine sehr hohe Fälschungssicherheit liefert.

## Patentansprüche

1. Kartenförmiger Datenträger (10) mit einem Substrat auf dem in einem Aufzeichnungsbereich (3) eine Farbstoffschicht (12) aufgebracht ist, auf der eine Abdeckschicht (14) vorgesehen ist.

2. Datenträger nach Anspruch 1, **dadurch gekennzeichnet, dass** die Farbstoffschicht (12) aus wenigstens zwei Farbstoffen mit unterschiedlichen Bunttönen hergestellt ist.

3. Datenträger nach Anspruch 2, **dadurch gekennzeichnet, dass** die Farbstoffschicht aus wenigstens zwei Farbstofffilmen mit unterschiedlichen Bunttönen hergestellt ist, die zumindest teilweise überlappend, vorzugsweise jedoch deckungsgleich übereinander liegend ausgebildet sind.

4. Datenträger nach Anspruch 2, **dadurch gekennzeichnet, dass** die verschiedenen Farbstoffe in einer Lage abwechselnd linienrasterförmig angeordnet sind.

5. Datenträger nach Anspruch 2, **dadurch gekennzeichnet, dass** die verschiedenen Farbstoffe in einer Lage als Farbstoffpunkte (17) abwechselnd rasterförmig angeordnet sind, so dass in jedem Bildpunkt (P) alle verwendeten Bunttöne vorhanden sind.

6. Datenträger nach Anspruch 5, **dadurch gekennzeichnet, dass** die jeweiligen Farbstoffpunkte (17) in den verschiedenen Bildpunkten (P) zufällig oder pseudozufällig abwechselnde Positionen einnehmen.

7. Datenträger nach Ansprüchen 4, 5 oder 6, **dadurch gekennzeichnet, dass** die Rasterweite entsprechend einer Bildpunktgröße einer aufzuzeichnenden Information gewählt ist.

8. Datenträger nach Ansprüchen 2 bis 7, **dadurch gekennzeichnet, dass** die Farbstoffschicht aus drei Farbstoffen hergestellt ist, deren jeweiligen Bunttöne (c, m, g) den Komplementärfarben von rot, grün und blau entsprechen.

9. Datenträger nach einem der vorstehenden Ansprüche, **dadurch gekennzeichnet, dass** die Abdeckschicht (14) undurchsichtig ist.

10. Datenträger nach einem der vorstehenden Ansprüche, **dadurch gekennzeichnet, dass** die Abdeckschicht (14) eine Metallschicht umfasst.

11. Datenträger nach Anspruch 10, **dadurch gekennzeichnet, dass** als Metallschicht für die Abdeckschicht (14) eine Metallfolie vorgesehen ist, die über der Farbstoffschicht liegend auf das Substrat (11) auflaminiert ist.

12. Datenträger nach Anspruch 10, **dadurch gekennzeichnet, dass** als Metallschicht für die Abdeckschicht (14) ein Metallfilm vorgesehen ist, der die Farbstoffschicht (12) abdeckend auf das Substrat (11) aufgedampft ist.

13. Datenträger nach Ansprüchen 10, 11 oder 12, **dadurch gekennzeichnet, dass** die Abdeckschicht (14) eine auf der Metallschicht liegende Farbstoffschicht (21) umfasst, deren Farbton (Buntton, weiß, schwarz oder grau) die Oberflächenfarbe der Abdeckschicht (14), vorzugsweise weiß, festlegt.

14. Datenträger nach Anspruch 13, **dadurch gekennzeichnet, dass** die auf der Metallschicht liegende Farbstoffschicht (21) eine Metalloxidschicht ist, die insbesondere durch Oxidation der Metallschicht erzeugt ist.

15. Datenträger nach einem der vorstehenden Ansprüche, **dadurch gekennzeichnet, dass** das Substrat (11) aus Polycarbonat besteht oder Polycarbonat enthält.

16. Datenträger nach einem der vorstehenden Ansprüche, **dadurch gekennzeichnet, dass** die Abdeckschicht (14) derart gemustert ist, dass die Farbstoffschicht (12) entsprechend einer im Aufzeichnungsbereich des Datenträgers (10) darzustellenden Information, insbesondere Bildinformation freigelegt, also sichtbar ist.

17. Datenträger nach Anspruch 16, **dadurch gekennzeichnet, dass** Information, insbesondere Bildinformation, die einem Schwarz- und/oder Grauanteil der aufzuzeichnende Information darstellt, mittels Strahlung, insbesondere Laserstrahlung in das Substrat eingeschrieben ist.

18. Datenträger nach einem der vorstehenden Ansprüche, **dadurch gekennzeichnet, dass** auf dem gesamten Substrat (11) eine transparente Deckschicht (15) aufgebracht ist, die vorzugsweise aus Polycarbonat besteht oder Polycarbonat enthält.

19. Verfahren zum Herstellen eines kartenförmigen Datenträgers nach Anspruch 16, mit folgenden Schritten:
- Bereitstellen eines Substrats (11),
- Aufbringen einer Farbstoffschicht (12),
- Aufbringen einer die Farbstoffschicht (12) abdeckenden Abdeckschicht (14), und
- teilweises Entfernen der Abdeckschicht (14) entsprechend einer im Aufzeichnungsbereich des Datenträgers darzustellenden Information, insbesondere Bildinformation mittels Strahlung, insbesondere mittels Laserstrahlung.

20. Verfahren nach Anspruch 19 zum Herstellen eines kartenförmigen Datenträgers nach Anspruch 17, **dadurch gekennzeichnet, dass** während oder nach dem Entfernen der Abdeckschicht (14) Information entsprechend einem Schwarz- und/oder Grauanteil der darzustellenden Information mittels Strahlung, insbesondere Laserstrahlung in das Substrat (11) eingeschrieben wird.

21. Verfahren nach Anspruch 19 oder 20, **dadurch gekennzeichnet, dass**:
- nach dem Aufbringen der Abdeckschicht (14) eine transparente Deckschicht (15) auf dem gesamten Substrat (11) aufgebracht wird, und
- das teilweise Entfernen der Abdeckschicht (14) und gegebenenfalls das Einschreiben von unbunter Information in das Substrat (11) durch die Deckschicht (15) hindurch erfolgt.
